# EUROPEAN PATENT SPECIFICATION

(11) **EP 2 340 922 B1**
(45) Date of publication and mention of the grant of the patent: **29.08.2012**
(21) Application number: 10196785.9
(22) Date of filing: 23.12.2010
(51) Int. Cl.: B29C 39/14, B29C 41/24, B29C 55/12, B29C 39/02, B29C 41/02, C08J 5/00

(54) **Method of forming flexible moisture and oxygen barrier thin film substrate**
Verfahren zum Herstellen eines flexiblen Feuchtigkeits- und Sauerstoffbarriere-Dünnfilmsubstrats
Procédé de formation d'un substrat souple à film mince formant barrière contre l'humidité et l'oxygène

(30) Priority: 28.12.2009 KR 20090131478
(43) Date of publication of application: 06.07.2011
(73) Proprietor: Korea Advanced Institute of Science and Technology, 305-701 Daejeon (KR)
(72) Inventor: Yoon, Choon Sup, 305-755 Daejon (KR); Chang, Jin Hae, 138-220 Seoul (KR); Ahn, Yong Ho, 437-821 Gyeonggi-do (KR)
(74) Representative: Wennborg, Johan

(56) References cited:
- US-A1- 2005 266 159
- US-A1- 2008 044 639
- DATABASE WPI Week 201108 Thomson Scientific, London, GB; AN 2010-M98856 XP002629432, & KR 100 985 782 B1 (KOREA ADV INST SCI&TECHNOLOGY) 6 October 2010 (2010-10-06)

## Description

### BACKGROUND OF THE INVENTION

### 1. Field of the Invention

The present invention relates to a method of forming a flexible thin film, and, more particularly, to a method of forming a flexible moisture and oxygen resistant thin film which can be applied to flexible display substrates by preventing the life-spans of organic devices from being shortened due to externally-permeated moisture or oxygen, and which can be applied to food packaging by preventing foods from being decayed or oxidized due to moisture or oxygen.

### 2. Description of the Related Art

Generally, liquid crystal displays (LCDs) using a glass substrate were first introduced early in the 1960's and have been widely used to manufacture information display apparatuses, such as calculators, clocks, mobile phones, PDAs, audio and video apparatuses, computers, vehicle instrument panels, and the like. However, these LCDs are partially problematic although they are being widely used.

That is, owing to the characteristic of glass used as a substrate, these LCDs are problematic in that they are fragile, heavy and unbendable and in that the thickness of a glass substrate is limited. Therefore, in order to solve this problem, a glass substrate may be replaced by a plastic substrate.

Recently, with the advancement of display devices, it has been required that gas barrier layers used in liquid crystal displays (LCDs) and organic light emitting diodes displays (OLEDs) become lighter and able to easily bend and fold such that they can be used in flexible displays.

Therefore, research into transparent plastic substrates or resin film-based substrates instead of glass substrates which are heavy and fragile and difficult to use in a large area is being made. That is, transparent plastic substrates or resin film-based substrates having mechanical flexibility and excellent gas barrier properties are required to manufacture organic light emitting diodes displays (OLEDs), liquid crystal displays (LCDs), electronic paper (e-paper) displays (EPDs) and the like.

However, the gas barrier properties of transparent plastic substrates or resin film-based substrates are inferior to those of glass substrates, so that moisture or oxygen can be permeated into organic light emitting diodes displays (OLEDs), liquid crystal displays (LCDs), electronic paper (e-paper) displays (EPDs) and the like through the transparent plastic substrates or resin film-based substrates, with the result that the life-spans of organic light emitting diodes displays (OLEDs), liquid crystal displays (LCDs), electronic paper (e-paper) displays (EPDs) and the like decreases, and the quality thereof is deteriorated.

In order to overcome the above problems, an inorganic oxide film containing at least one selected from the group consisting of Si, Al, In, Sn, Zn and Ti is formed on a plastic film, so as to develop a transparent plastic substrate having good gas barrier properties. For example, there is proposed a gas barrier film formed by forming a silicon oxide film on a plastic film using vapor deposition or a gas barrier film formed by forming an aluminum oxide film on a plastic film using vapor deposition. However, since this inorganic oxide film cracks when it is bent in a predetermined radius of curvature or less, the mechanical flexibility of a gas barrier film cannot be improved.

As described above, as organic electroluminescence displays and high-resolution color liquid crystal displays are rapidly put to practical use, a film (flexible substrate) having gas barrier properties is required because nonluminescent regions, that is, dark spots occur, and the interface between a cathode layer and an organic active layer is deteriorated when moisture and oxygen is permeated into an organic light emitting diodes display device. In other words, externally-permeated moisture or oxygen decomposes or degrades organic material, thus reducing the life-span of the organic light emitting diodes display device.

Further, currently, polymers, such as polypropylene (PP), polyethylene (PE), polystyrene (PS), polyvinyl alcohol (PVA) and the like, are being used to manufacture food packaging. Such food packaging using these polymers prevent water vapor and oxygen from being externally permeated, thus preventing foods from being decayed or oxidized due to the externally-permeated water vapor or oxygen.

US-A-2005266159 discloses a method of manufacturing an optical film by casting a solution of a polymer and nana-particles onto a substrate to form a thin film, drying said film, heating, said film and stretching said film.

### SUMMARY OF THE INVENTION

Accordingly, the present invention has been made to solve the above-mentioned problems, and an object of the present invention is to provide a method of forming a flexible moisture and oxygen barrier thin film which can increase the life-span of a display device by decreasing the permeation rate of moisture and oxygen.

Another object of the present invention is to provide a method of forming a flexible moisture and oxygen barrier thin film which can reduce the production cost of a flexible substrate by dispersing and orienting nanometer-size or micrometer-size plate-shape particles for gas barrier in the flexible substrate.

Still another object of the present invention is to provide a method of forming a flexible moisture and oxygen barrier thin film which can prevent foods from being decayed or oxidized due to moisture or oxygen passing through a food packaging material.

In order to accomplish the above objects, an aspect of the present invention provides a method of forming a flexible moisture and oxygen barrier thin film for flexible displays and food packaging, including the steps of: a) uniformly dispersing nanometer-size or micrometer-size plate-shape particles in polymer solution; b) casting the polymer solution dispersed with the nanometer-size or micrometer-size plate-shape particles using the solution casting method and then removing the solvent from the cast polymer solution to form a plastic film by heating in a vacuum; c) stretching the formed plastic film between the glass transition temperature and melting temperature to exfoliate the nanometer-size or micrometer-size plate-shape particles and to orient the exfoliated plate-shape nanometer-size or micrometer-size particles in parallel with the surface of the film; d) coating the stretched plastic film with an organic film to smooth the surface of a flexible substrate; and e) heat-treating the flexible substrate to cure the organic film.

Here, the flexible substrate may be a plastic film.

Further, examples of the plate-shape nanometer-size or micrometer-size particles may include montmorillonite, saponite, bentonite, mica particles, and glass particles.

Further, the nanometer-size or micrometer-size particles may include at least one element selected from among Si, B, Li, Na, K, Mg, Ca, Ti, Al, Ba, Zn, Ga, Ge, Bi, and Fe.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a flowchart illustrating a method of forming a flexible thin substrate film according to the present invention;
FIG. 2 shows views illustrating a method of forming a plastic film according to the present invention;
FIG. 3 shows views showing processes of stretching the plastic film formed according to the present invention, wherein FIG. 3A is a view showing a process of simultaneously stretching the plastic film horizontally and vertically, and
FIG. 3B is a view showing a process of sequentially stretching the plastic film horizontally and vertically;
FIG. 4 is a view showing a process of exfoliating and orienting nanometer-size or micrometer-size particles; and
FIG. 5 is a view showing a flexible thin film formed using the method.

### DESCRIPTION OF THE PREFERRED EMBODIMENTS

The present invention provides a method of forming a flexible moisture and oxygen barrier thin film for flexible displays and food packaging, including the steps of: a) uniformly dispersing nanometer-size or micrometer-size plate-shape particles in polymer solution; b) casting the polymer solution dispersed with the nanometer-size or micrometer-size plate-shape particles using the solution casting method and then removing the solvent from the cast polymer solution to form a plastic film by heating in a vacuum; c) stretching the formed plastic film between the glass transition temperature and melting temperature to exfoliate the nanometer-size or micrometer-size plate-shape particles and to orient the exfoliated plate-shape nanometer-size or micrometer-size particles; d) coating the stretched plastic film with an organic film to smooth the surface of the flexible substrate; and e) heat-treating the flexible substrate to cure the organic film.

Here, in step a), the concentration of nanometer-size or micrometer-size particles in polymer ranges from 0.1 to 60 wt%.

Here, in step c), the formed plastic film may be simultaneously or sequentially stretched horizontally and vertically.

Further, the stretched plastic film may have a thermal expansion coefficient of 0.1% or less, preferably, 0.05% or less.

Further, the flexible substrate may be a plastic film.

Further, the plastic film may have a thickness of 5 ∼ 1000 µm, and may be made of any one polymer selected from among polyestersulfone, polyethylene, ultrahigh molecular weight polyethylene, polyvinyl alcohol, polycarbonate, polystyrene, polyethylene terephthalate, polyethylene naphthalate, polybutylene terephthalate, polyphenylene sulfide, polypropylene, polyamide, aramid, polyamideimide, polyimide, aromatic polyimide, polyetherimide, acrylonitrile butadiene styrene, a cyclic olefin copolymer, and polyvinyl chloride.

Further, the organic film may be made of any one selected from among benzocyclobutene (BCB), acrylic resin, epoxy resin, polyvinyl phenol (PVP), and polyvinyl alcohol (PVA).

Further, the nanometer-size or micrometer-size particles may have a plate-shape structure.

Further, the nanometer-size or micrometer-size particles may have a size of 10 nm ∼ 1000 µm in length.

Further, the nanometer-size or micrometer-size particles may include at least one kind of particles selected from among montmorillonite, saponite, bentonite, mica particles, and glass particles

Furthermore, the nanometer-size or micrometer-size particles may include at least one element selected from among Si, B, Li, Na, K, Mg, Ca, Ti, Al, Ba, Zn, Ga, Ge, Bi, and Fe.

Hereinafter, preferred embodiments of the present invention will be described in detail with reference to the attached drawings.

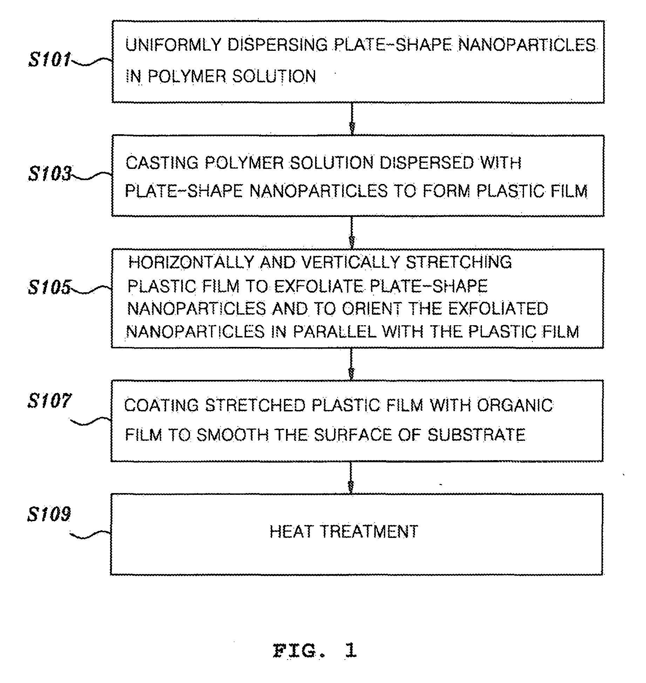

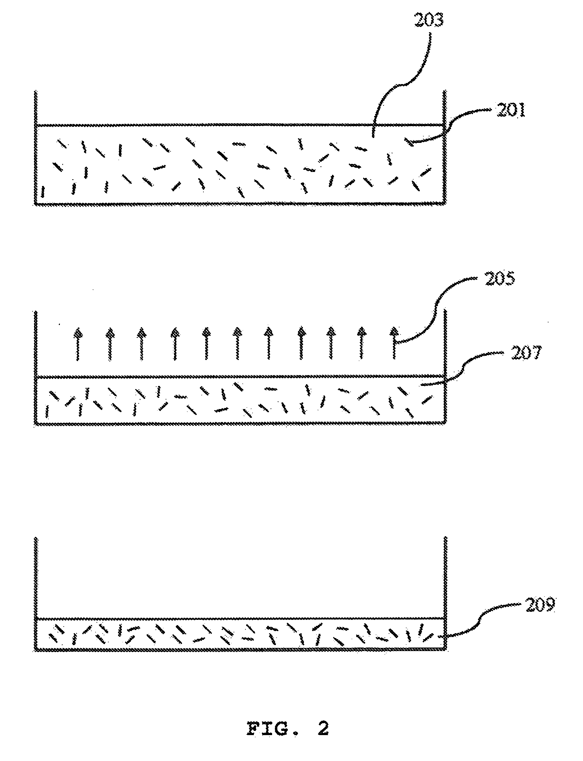

FIG. 1 is a flowchart illustrating a method of forming a flexible thin film according to the present invention, and FIG. 2 shows views illustrating a method of forming a plastic substrate according to the present invention. As shown in FIGS. 1 and 2, in step 101 (S101), a polymer, serving as a base material of a flexible substrate, is dissolved in a solvent, and then nanometer-size or micrometer-size particles are uniformly dispersed in the polymer solution. In order to uniformly disperse the nanometer-size or micrometer-size particles in the polymer solution, organic molecules or groups, which are easily mixed with the polymer, are chemically bonded to the nanometer-size or micrometer-size particles and then used.

Here, the nanometer-size or micrometer-size particles 201 may have a plate-shape structure, and examples of the nanometer-size or micrometer-size particles 201 may include montmorillonite, saponite, bentonite, mica particles, and glass particles. Further, the nanometer-size or micrometer-size particles 201 may include at least one element selected from among Si, B, Li, Na, K, Mg, Ca, Ti, Al, Ba, Zn, Ga, Ge, Bi, and Fe. Further, it is preferred that the nanometer-size or micrometer-size particles have a size of 100 nm ∼ 100 µm in length.

Subsequently, in step 103 (S103), the polymer solution 203 dispersed with the plate-shape nanometer-size or micrometer-size particles 201 is cast using the solution casting method, and then the solvent is removed from the cast polymer solution 205 to form a plastic film 209.

The plastic film 209 may have a thickness of 5 ∼ 1000 µm, and is made of any one polymer selected from among polyestersulfone, polyethylene, ultrahigh molecular weight polyethylene, polyvinyl alcohol, polycarbonate, polystyrene, polyethylene terephthalate, polyethylene naphthalate, polybutylene terephthalate, polyphenylene sulfide, polypropylene, polyamide, aramid, polyamideimide, polyimide, aromatic polyimide, polyetherimide, acrylonitrile butadiene styrene, cyclic olefin copolymer, and polyvinyl chloride.

Subsequently, in step 105 (S105), the plastic film 209 is stretched such that the nanometer-size or micrometer-size particles are exfoliated and the exfoliated plate-shape nanometer-size or micrometer-size particles are oriented in parallel with the surface of the plastic film 209. In this way, the polymer chains in the plastic film 209 are aligned along the direction of stretching by applying mechanical force to the plastic film 209, and thus the nanometer-size or micrometer-size particles are also oriented in parallel with the surface of the plastic film 209. In order to stretch the plastic film 209, the plastic film 209 is heated to a temperature between the glass transition temperature and melting point of the polymer.

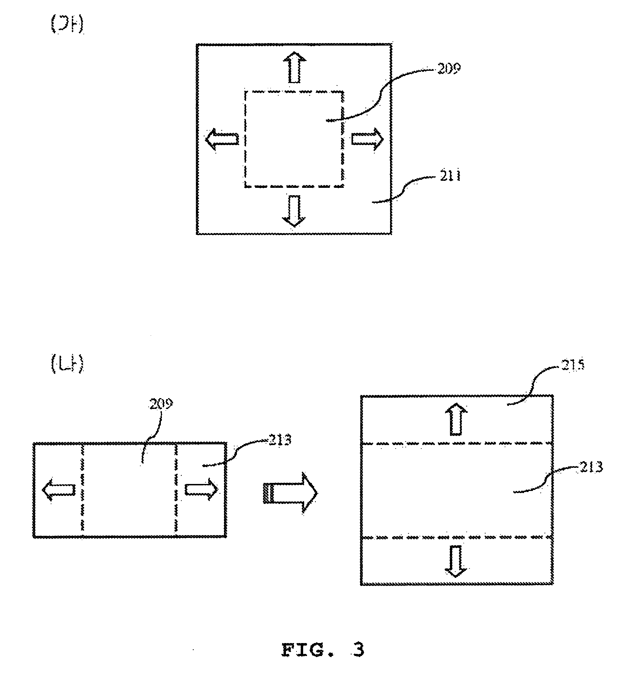

FIG. 3 shows schematic views showing processes of stretching the plastic film 209. As shown in FIG. 3, the plastic film 209 formed using the solution casting method is horizontally and vertically stretched to a stretching ratio of 2.0 ∼ 10.0 at a temperature between the glass transition temperature and melting point of the polymer. Therefore, the nanometer-size or micrometer-size particles 201 are oriented in more parallel with the surface of the plastic film 209 by the stretching of the plastic film 209.

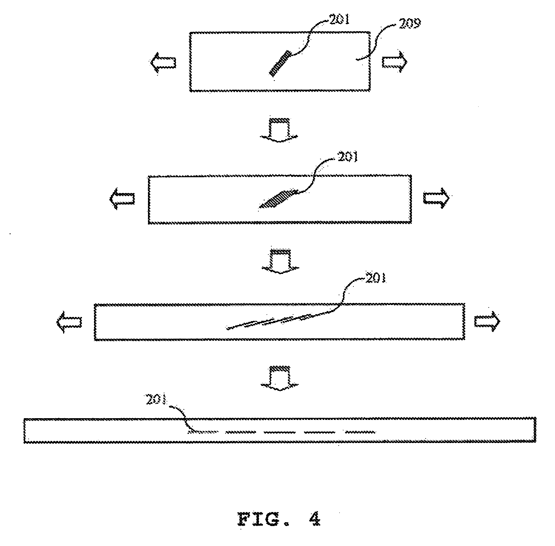

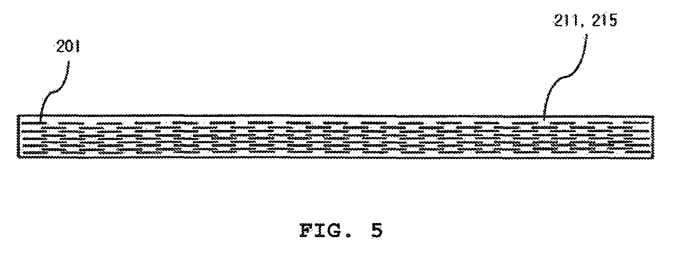

Here, the stretching of the plastic film 209 may be performed by a general method using a roll or stenter. The plastic film 209 may be simultaneously or sequentially stretched horizontally and vertically. Therefore, the nanometer-size or micrometer-size particles 201 are dispersed and exfoliated and oriented in the flexible substrate, that is, the plastic film such that they are aligned in parallel with the surface thereof as shown in FIGS. 4 and 5.

Subsequently, in step 107 (S107), the stretched plastic film 211 imbedded with the nanometer-size or micrometer-size particles 201 is smoothed. In order to smooth the surface of the stretched plastic film 211, the stretched plastic film 211 is coated with an organic film using spin coating or deposition. Here, the organic film may be made of any one selected from among benzocyclobutene (BCB), an acrylic resin, an epoxy resin, polyvinyl phenol (PVP), and polyvinyl alcohol (PVA).

The organic film serves as a gas barrier as well as serves to smooth the surface of the stretched plastic film 211 imbedded with the nanometer-size or micrometer-size particles 201. Further, this organic film serves to prevent the deformation of a plastic substrate due to the permeation of chemicals such as a stripper, an etchant and the like used in the fabrication process into the stretched plastic film 211, and serves to prevent compounds containing water vapor from being permeated into the stretched plastic film 211.

Subsequently, in step 109 (S109), heat treatment is performed. This heat treatment is performed in order to prevent bubbles from being formed in the organic film, the bubbles being formed because gases generated during the curing of the organic film are not discharged to the outside of the organic film. Therefore, in this step, the solvent which dissolves the polymer is vaporized by the heat treatment. Further, this heat treatment provides uniformity to a flexible plastic substrate of the present invention when it is performed at suitable temperature for a predetermined time, in addition to the curing of organic film. Therefore, since the flexible plastic substrate of the present invention has low moisture and oxygen permeability, external gases, such as oxygen, moisture and the like, can be efficiently blocked.

Therefore, the present invention is advantageous in that plate-shape nanometer-size or micrometer-size particles are dispersed in a plastic film and are arranged in parallel with the surface of the plastic film, so that the permeation of external moisture and oxygen into the plastic film is prevented, with the result that an organic device mounted on the substrate is protected, thereby increasing the life-span of the organic device, and is advantageous in that the permeation of external moisture and oxygen into food packaging is prevented, thus preventing or retarding the decay and oxidation of foods.

As described above, according to the method of forming a flexible moisture and oxygen barrier thin film of the present invention, plate-shape nanometer-size or micrometer-size particles are imbedded and oriented in a flexible display substrate, so that the permeation rate of external moisture and oxygen into the flexible display substrate is reduced, with the result that the life-span of a flexible display increases, the fabrication of the flexible display substrate becomes easy, and the production cost decreases, thereby increasing the industrial applicability of the flexible display substrate. Further, according to the method of forming a flexible moisture and oxygen barrier thin film of the present invention, the permeation of external moisture and oxygen into food packaging is prevented, so that the decay and oxidation of foods is prevented or retarded, with the result that the period of packaged food storage can be remarkably increased, and distribution costs are decreased, thereby increasing industrial applicability.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method of forming a flexible moisture and oxygen barrier substrate for flexible displays and food packaging, comprising the steps of:
a) uniformly dispersing nanometer-size or micrometer-size particles in polymer solution;
b) casting the polymer solution dispersed with the nanometer-size or micrometer-size particles using the solution casting method and then removing the solvent from the polymer solution to form a plastic film;
c) stretching the formed plastic film between the glass transition temperature and melting point to exfoliate the nanometer-size or micrometer-size particles and to orient the exfoliated plate-shape nanometer-size or micrometer-size particles in parallel with the surface of the plastic film;
d) coating the stretched plastic film with an organic film to smooth the surface of the flexible substrate; and
e) heat-treating the flexible substrate to remove the air bubbles and to cure the organic film.

2. The method according to claim 1, wherein, in step a), the concentration of nanometer-size or micrometer-size particles in polymer ranges from 0.1 to 60 wt%.

3. The method according to claim 1, wherein, in step c), the formed plastic film is simultaneously or sequentially stretched horizontally and vertically.

4. The method according to claim 1 or 2, wherein the stretched plastic film has a thermal expansion coefficient of 0.1% or less, preferably, 0.05%.

5. The method according to claim 1, wherein the flexible substrate is a plastic film.

6. The method according to claim 1, wherein the plastic film has a thickness of 5 - 1000 µm, and is made of any one polymer selected from among polyestersulfone, polyethylene, ultrahigh molecular weight polyethylene, polyvinyl alcohol, polycarbonate, polystyrene, polyethylene terephthalate, polyethylene naphthalate, polybutylene terephthalate, polyphenylene sulfide, polypropylene, polyamide, aramid, polyamideimide, polyimide, aromatic polyimide, polyetherimide, acrylonitrile butadiene styrene, cyclic olefin copolymer, and polyvinyl chloride.

7. The method according to claim 1, wherein, in step d), the organic film is made of any one selected from among benzocyclobutene (BCB), an acrylic resin, an epoxy resin, polyvinyl phenol (PVP), and polyvinyl alcohol (PVA).

8. The method according to claim 1, wherein the nanometer-size or micrometer-size particles have a plate-shape structure.

9. The method according to claim 1, wherein the nanometer-size or micrometer-size particles have a size of 10 nm - 1000 µm in length.

10. The method according to any one of claim 1, 8 and 9, wherein the nanometer-size or micrometer-size particles include at least one kind of particles selected from among montmorillonite, saponite, bentonite, mica particles, and glass particles.

11. The method according to any one of claim 1, 8 and 9, wherein the nanometer-size or micrometer-size particles include at least one element selected from among Si, B, Li, Na, K, Mg, Ca, Ti, Al, Ba, Zn, Ga, Ge, Bi, and Fe.

## Patentansprüche

1. Verfahren zum Bilden eines flexiblen Substrats mit Feuchtigkeits- und Sauerstoffsperre für flexible Displays und Lebensmittelverpackungen, umfassend die Schritte:
a) gleichförmiges Dispergieren von nanometergroßen oder mikrometergroßen Teilchen in einer Polymerlösung;
b) Gießen der Polymerlösung, in welcher die nanometergroßen oder mikrometergroßen Teilchen dispergiert sind, unter Verwendung des Lösungsgießverfahrens und dann Entfernen des Lösungsmittels aus der Polymerlösung unter Bildung eines Kunststofffilms;
c) Dehnen des gebildeten Kunststofffilms zwischen der Glasübergangstemperatur und dem Schmelzpunkt zum Abblättern der nanometergroßen oder mikrometergroßen Teilchen und zum Ausrichten der abgeblätterten plattenförmigen nanometergroßen oder mikrometergroßen Teilchen parallel zur Oberfläche des Kunststofffilms;
d) Beschichten des gedehnten Kunststofffilms mit einem organischen Film zum Glätten der Oberfläche des flexiblen Substrats; und
e) Wärmebehandeln des flexiblen Substrats zum Entfernen der Luftblasen und zum Aushärten des organischen Films.

2. Verfahren nach Anspruch 1, wobei in Schritt a) die Konzentration der nanometergroßen oder mikrometergroßen Teilchen im Polymer im Bereich von 0,1 bis 60 Gew.-% liegt.

3. Verfahren nach Anspruch 1, wobei in Schritt c) der gebildete Kunststofffilm gleichzeitig oder nacheinander horizontal und vertikal gedehnt wird.

4. Verfahren nach Anspruch 1 oder 2, wobei der gedehnte Kunststofffilm einen Wärmeausdehnungskoeffizienten von 0,1% oder weniger, vorzugsweise 0,05% aufweist.

5. Verfahren nach Anspruch 1, wobei das flexible Substrat ein Kunststofffilm ist.

6. Verfahren nach Anspruch 1, wobei der Kunststofffilm eine Dicke von 5∼1000 µm aufweist und aus einem beliebigen Polymer, ausgewählt aus Polyestersulfon, Polyethylen, Polyethylen mit ultrahohem Molekulargewicht, Polyvinylalkohol, Polycarbonat, Polystyrol, Polyethylenterephthalat, Polyethylennaphthalat, Polybutylenterephthalat, Polyphenylensulfid, Polypropylen, Polyamid, Aramid, Polyamidimid, Polyimid, aromatischem Polyimid, Polyetherimid, Acrylnitril-Butadien-Styrol, cyclischem Olefincopolymer und Polyvinylalkohol, hergestellt ist.

7. Verfahren nach Anspruch 1, wobei in Schritt d) der organische Film aus einem Beliebigen, ausgewählt aus Benzocyclobuten (BCB), einem Acrylharz, einem Epoxyharz, Polyvinylphenol (PVP) und Polyvinylalkohol (PVA), hergestellt ist.

8. Verfahren nach Anspruch 1, wobei die nanometergroßen oder mikrometergroßen Teilchen eine plattenförmige Struktur aufweisen.

9. Verfahren nach Anspruch 1, wobei die nanometergroßen oder mikrometergroßen Teilchen eine Größe von 10 nm ∼ 1000 µm in der Länge aufweisen.

10. Verfahren nach einem der Ansprüche 1, 8 und 9, wobei die nanometergroßen oder mikrometergroßen Teilchen mindestens eine Art von Teilchen einschließen, die ausgewählt sind aus Montmorillonit, Saponit, Bentonit, Glimmerteilchen und Glasteilchen.

11. Verfahren nach einem der Ansprüche 1, 8 und 9, wobei die nanometergroßen oder mikrometergroßen Teilchen mindestens ein Element einschließen, das ausgewählt ist aus Si, B, Li, Na, K, Mg, Ca, Ti, Al, Ba, Zn, Ga, Ge, Bi und Fe.

## Revendications

1. Un procédé de formation d'un substrat flexible formant barrière à l'humidité et à l'oxygène pour des afficheurs flexibles et des emballages alimentaires, comprenant les étapes suivantes :
a) dispersion uniforme de particules de dimension nanométrique ou de dimension micrométrique dans une solution de polymère ;
b) coulage de la solution de polymère dispersée avec les particules de dimension nanométrique ou de dimension micrométrique en utilisant le procédé de coulage en solution et ensuite élimination du solvant d'avec la solution de polymère pour former un film plastique ;
c) étirement du film plastique formé entre la transition de température vitreuse et le point de fusion pour exfolier les particules de dimension nanométrique ou de dimension micrométrique et pour orienter les particules de dimension nanométrique ou de dimension micrométrique en forme de plaquettes exfoliées parallèlement à la surface du film plastique ;
d) revêtement du film plastique étiré par un film organique pour lisser la surface du substrat flexible ; et
e) traitement thermique du substrat flexible pour éliminer les bulles d'air et pour durcir le film organique.

2. Le procédé de la revendication 1, dans lequel, à l'étape a), la concentration des particules de dimension nanométrique ou de dimension micrométrique dans le polymère est comprise entre 0,1 et 60 % en poids.

3. Le procédé de la revendication 1, dans lequel, à l'étape c), le film plastique formé est étiré simultanément ou séquentiellement horizontalement et verticalement.

4. Le procédé de la revendication 1 ou 2, dans lequel le film plastique étiré présente un coefficient de dilation thermique de 0,1 % ou moins, de préférence de 0,05 %.

5. Le procédé de la revendication 1, dans lequel le substrat flexible est un film plastique.

6. Le procédé de la revendication 1, dans lequel le film plastique présente une épaisseur de 5 - 1000 pm, et est réalisé en l'un quelconque des polymères choisis parmi : polyestersulfone, polyéthylène, polyéthylène à poids moléculaire ultra élevé, polyvinyl alcool, polycarbonate, polystyrène, polyéthylène téréphtalate, polyéthylène naphthalate, polybutylène téréphtalate, polyphénylène sulfure, polypropylène, polyamide, aramide, polyamideimide, polyimide, polyimide aromatique, polyétherimide, acrylonitrile butadiène styrène, copolymère d'oléfines cycliques, et polychlorure de vinyle.

7. Le procédé de la revendication 1, dans lequel, à l'étape d), le film organique est réalisé en l'un quelconque choisi parmi : le benzocyclobutène (BCB), une résine acrylique, une résine époxy, un polyvinyl phénol (PVP) et un polyvinyl alcool (PVA).

8. Le procédé de la revendication 1, dans lequel les particules de dimension nanométrique ou de dimension micrométrique présentent une structure avec une forme en plaquettes.

9. Le procédé de la revendication 1, dans lequel les particules de dimension nanométrique ou de dimension micrométrique présentent une dimension de 10 nm - 1000 µm en longueur.

10. Le procédé de l'une des revendications 1, 8 et 9, dans lequel les particules de dimension nanométrique ou de dimension micrométrique comprennent au moins un type de particule choisi parmi : montmorillonite, saponite, bentonite, particules de mica et particules de verre.

11. Le procédé selon l'une des revendications 1, 8 et 9, dans lequel les particules de dimension nanométrique ou de dimension micrométrique comprennent au moins un élément choisi parmi : Si, B, Li, Na, K, Mg, Ca, Ti, Al, Ba, Zn, Ga, Ge, Bi et Fe.
